# EUROPÄISCHE PATENTANMELDUNG

(11) **EP 1 199 219 A1**
(43) Veröffentlichungstag der Anmeldung: **24.04.2002**
(21) Anmeldenummer: 01117354.9
(22) Anmeldetag: 18.07.2001
(51) Int. Cl.: B60R 1/072

(54) **Kraftfahrzeug-Rückblickspiegel**

(30) Priorität: 17.10.2000 DE 10051240
(71) Anmelder: Bühler Motor GmbH, 90459 Nürnberg (DE)
(72) Erfinder: Guttenberger, Richard, 91171 Greding (DE); Seichter, Werner, 91166 Georgensgmünd (DE)

(57) **Zusammenfassung**

Die Erfindung betrifft Kraftfahrzeug-Rückblickspiegel, mit einem Spiegelglasantrieb, bestehend aus zumindest einem Antriebsmotor und einem nachgeordneten Untersetzungsgetriebe, das über Verstellelemente mit einer Spiegelglasträgerplatte (3) gelenkig verbunden ist, die schwenkbeweglich über ein zentrales Gelenk (9) um zwei senkrecht zueinander angeordnete Schwenkachsen verschwenkbar mit dem Spiegelglasantrieb verbunden ist. Aufgabe der vorliegenden Erfindung ist es einen Kraftfahrzeug-Rückblickspiegel mit einer Spiegelglasträgerplatte (3) zu versehen, die eine möglichst homogene Struktur aufweist, richtungsunabhängig belastbar ist und eine möglichst geringe Vibrationsanfälligkeit besitzt. Diese Aufgabe wird erfindungsgemäß dadurch gelöst, dass die Spiegelglasträgerplatte im wesentlichen durch Versteifungsrippen (5) in Form einer Wabenstruktur gebildet wird.

## Beschreibung

Die Erfindung betrifft Kraftfahrzeug-Rückblickspiegel, mit einem Spiegelglasantrieb, bestehend aus zumindest einem Antriebsmotor und einem nachgeordneten Untersetzungsgetriebe, das über Verstellelemente mit einer Spiegelglasträgerplatte gelenkig verbunden ist, die schwenkbeweglich über ein zentrales Gelenk um zwei senkrecht zueinander angeordnete Schwenkachsen verschwenkbar mit dem Spiegelglasantrieb verbunden ist.

Aus der DE-PS 196 44 824 C1 ist ein Kraftfahrzeug-Rückblickspiegel mit einer vollflächigen Spiegelglasträgerplatte bekannt, bei der zur Versteifung unterschiedlich geformte und unterschiedlich angeordnete Versteifungsrippen vorgesehen sind. Durch diese Anordnung der Versteifungsrippen werden Kräfte in unterschiedlichen Richtungen unterschiedlich weitergeleitet und Vibrationen richtungsabhängig mehr oder weniger stark gedämpft. Bei Änderung der äußeren Bedingungen kann daher eine aufwändige Anpassung der geometrischen Anordnung der Versteifungsrippen erforderlich werden.

Daher ist es Aufgabe der vorliegenden Erfindung einen Kraftfahrzeug-Rückblickspiegel mit einer Spiegelglasträgerplatte zu versehen, die eine möglichst homogene Struktur aufweist, richtungsunabhängig belastbar ist und eine möglichst geringe Vibrationsanfälligkeit besitzt.

Diese Aufgabe wird erfindungsgemäß dadurch gelöst, dass die Spiegelglasträgerplatte im wesentlichen durch Versteifungsrippen in Form einer Wabenstruktur gebildet wird. Hierdurch ist die Spiegelglasträgerplatte in allen Raumrichtungen gleichmäßig belastbar und die Vibrationsanfälligkeit sehr gering.

Bei Ausbildung der Spiegelglasträgerplatte aus einem Kunststoffmaterial ist eine deutliche Gewichtseinsparung gegenüber einer Spiegelglasträgerplatte aus einem Metallmaterial und eine wirtschaftlichere Herstellung möglich. Durch die Wabenstruktur ist das Kunststoffmaterial verwendbar, ohne eine höhere Vibrationsanfälligkeit in Kauf nehmen zu müssen.

Eine größere Stabilität und Steifigkeit der Spiegelglasträgerplatte wird durch einen Boden erreicht, der parallel zu einer Spiegelfläche auf einer Seite der Versteifungsrippen oder zwischen beiden Seiten der Spiegelglasträgerplatte angeordnet ist.

Eine besonders geringe Vibrationsanfälligkeit ist durch eine Vielzahl von Böden erreichbar, von denen je einer in jeder Wabe angeordnet ist und die Vielzahl von Böden auf unterschiedlichen Niveaus parallel zu einer Spiegelfläche angeordnet sind.

Geringeres Gewicht und daher auch eine verringerte Vibrationsanfälligkeit bei hoher Stabilität und Steifigkeit ist erreichbar indem der größere Teil der tragenden Bereiche der Spiegelglasträgerplatte ausschließlich durch die Versteifungsrippen gebildet wird, wobei zwischen diesen Versteifungsrippen Durchgänge vorgesehen sind. Noch deutlicher wird dieser Effekt bei Verwendung von Waben, die innen völlig freigespart sind.

Weitere Gewichtseinsparungen sind möglich durch unterschiedlich hoch ausgebildete Versteifungsrippen, wobei an den Stellen, die eine höhere Beanspruchung erfahren höhere Versteifungsrippen vorzusehen sind. Daher ist vorgesehen dass die Versteifungsrippen von einem Randbereich der Spiegelglasträgerplatte zum zentralen Gelenk hin kegelförmig höher werdend ausgebildet sind.

Es ist von Vorteil die Größe der Waben in Bereichen mit hoher Beanspruchung kleiner als in Bereichen mit geringerer Beanspruchung auszubilden, weil dadurch ein optimales Verhältnis von Gewicht und Festigkeit möglich ist.

Ausführungsbeispiele der Erfindung werden nachfolgend anhand der Zeichnung näher erläutert. Es zeigen:
- Fig. 1: eine Spiegelglasträgerplatte eines bekannten Kraftfahrzeug-Rückblickspiegels,
- Fig. 2: eine erste Ausführungsform einer Spiegelglasträgerplatte eines erfindungsgemäßen Kraftfahrzeug-Rückblickspiegels,
- Fig. 3: eine Schnittansicht der ersten Ausführungsform,
- Fig. 4: eine Variante der ersten Ausführungsform im Schnitt,
- Fig. 5: eine zweite Ausführungsform im Schnitt und
- Fig. 6: eine Variante der zweiten Ausführungsform.

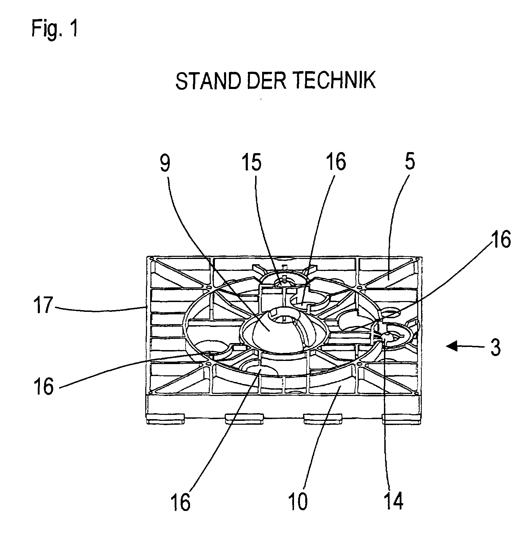

Fig. 1 zeigt eine Spiegelglasträgerplatte 3 eines bekannten Kraftfahrzeug-Rückblickspiegels, mit einem zentralen Gelenk 9, einer ersten und zweiten Verbindungsstelle 14, 15 für die gelenkige Verbindung mit Verstellelementen, Ausnehmungen 16 zur Durchführung von Montagewerkzeugen, Versteifungsrippen 5, einem Boden 10 und einem Rand 17.

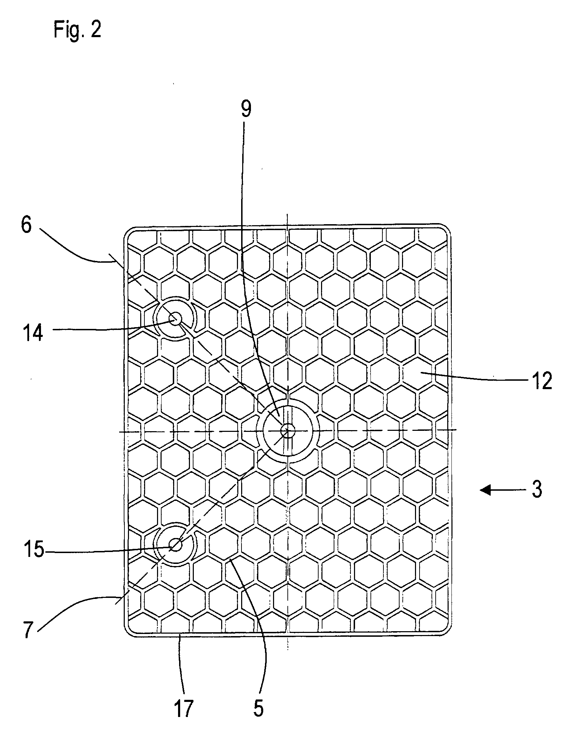

Fig. 2 zeigt eine erste Ausführungsform einer Spiegelglasträgerplatte 3 eines erfindungsgemäßen Kraftfahrzeug-Rückblickspiegels, mit Versteifungsrippen 5 in Form einer Wabenstruktur mit einer Vielzahl von Waben 12, einem Rand 17, einem zentralen Gelenk 9, eine erste und zweite Verbindungsstelle 14, 15 für die gelenkige Verbindung mit Verstellelementen, der ersten Schwenkachse 6 und der zweiten Schwenkachse 7.

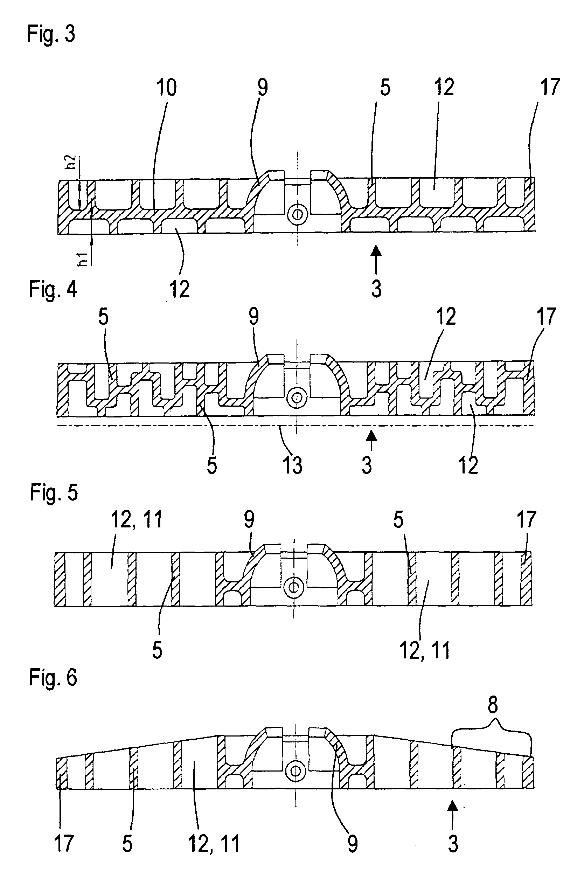

Fig. 3 zeigt eine Schnittansicht der ersten Ausführungsform in vereinfachter Darstellung, mit der Spiegelglasträgerplatte 3, dem zentralen Gelenk 9, dem Rand 17, den Versteifungsrippen 5, den Waben 12 und einem Boden 10. Auf beiden Seiten des Bodens 10 sind Waben 12 angeordnet, wobei die Höhe h1, h2 der Waben 12 unterschiedlich ist. Zueinander sind die Waben 12 beiderseits des Bodens 10 versetzt angeordnet.

Fig. 4 zeigt eine Variante der ersten Ausführungsform, mit der Spiegelglasträgerplatte 3, dem zentralen Gelenk 9, dem Rand 17, den Versteifungsrippen 5, den Waben 12 und einer Vielzahl an Böden 10, die auf unterschiedlichen Niveaus parallel zu einer Spiegelfläche 13 (nur angedeutet) angeordnet sind.

Fig. 5 zeigt eine zweite Ausführungsform, mit der Spiegelglasträgerplatte 3, dem zentralen Gelenk 9, den Versteifungsrippen 5, den Waben 12, dem Rand 17 und Duchgängen 11. Die Durchgänge 11 sind hier so groß wie die Waben 12, es sind aber auch Varianten denkbar, bei denen die Durchgänge 11 kleiner als die Waben 12 sind.

Fig. 6 zeigt eine Variante der zweiten Ausführungsform, mit der Spiegelglasträgerplatte 3, dem zentralen Gelenk 9, den Versteifungsrippen 5, den Waben 12, den Durchgängen 11 und dem Rand 17. Die Spiegelglasträgerplatte 3 ist hier in einem Randbereich 8 dünner ausgebildet als im zentralen Bereich.

### Bezugszeichenliste

- 1: Kraftfahrzeug-Rückblickspiegel
- 2: Spiegelglasantrieb
- 3: Spiegelglasträgerplatte
- 4: Verstellelemente
- 5: Versteifungsrippen
- 6: erste Schwenkachse
- 7: zweite Schwenkachse
- 8: Randbereich der Spiegelglasträgerplatte
- 9: zentrales Gelenk
- 10: Boden
- 11: Durchgänge
- 12: Wabe
- 13: Spiegelfläche
- 14: erste Verbindungsstelle
- 15: zweite Verbindungsstelle
- 16: Ausnehmungen
- 17: Rand

## Patentansprüche

1. Kraftfahrzeug-Rückblickspiegel (1), mit einem Spiegelglasantrieb (2), bestehend aus zumindest einem Antriebsmotor und einem nachgeordneten Untersetzungsgetriebe, das über Verstellelemente (4) mit einer Spiegelglasträgerplatte (3) gelenkig verbunden ist, die schwenkbeweglich über ein zentrales Gelenk (9) um zwei senkrecht zueinander angeordnete Schwenkachsen (6, 7) verschwenkbar mit dem Spiegelglasantrieb (2) verbunden ist, **dadurch gekennzeichnet, dass** die Spiegelglasträgerplatte (3) im wesentlichen durch Versteifungsrippen (5) in Form einer Wabenstruktur gebildet wird.

2. Kraftfahrzeug-Rückblickspiegel nach Anspruch 1, **dadurch gekennzeichnet, dass** die Spiegelglasträgerplatte (3) aus einem Kunststoffmaterial besteht.

3. Kraftfahrzeug-Rückblickspiegel nach Anspruch 1 oder 2, **dadurch gekennzeichnet, dass** die Spiegelglasträgerplatte (3) einen Boden (10) aufweist, der parallel zu einer Spiegelfläche (13) auf einer Seite der Versteifungsrippen (5) oder zwischen beiden Seiten angeordnet ist.

4. Kraftfahrzeug-Rückblickspiegel nach Anspruch 1 oder 2, **dadurch gekennzeichnet, dass** die Spiegelglasträgerplatte (3) eine Vielzahl von Böden (10) aufweist, von denen je einer in jeder Wabe (12) angeordnet ist und die Vielzahl von Böden auf unterschiedlichen Niveaus parallel zu einer Spiegelfläche (13) angeordnet sind.

5. Kraftfahrzeug-Rückblickspiegel nach Anspruch 1 oder 2, **dadurch gekennzeichnet, dass** der größere Teil der tragenden Bereiche der Spiegelglasträgerplatte (3) ausschließlich durch die Versteifungsrippen (5) gebildet wird, wobei zwischen diesen Versteifungsrippen (5) Durchgänge (11) vorgesehen sind.

6. Kraftfahrzeug-Rückblickspiegel nach Anspruch 1, 2 oder 5, **dadurch gekennzeichnet, dass** der größere Teil der Waben (12) innen völlig freigespart ist.

7. Kraftfahrzeug-Rückblickspiegel nach Anspruch 1, 2, 3 oder 4, **dadurch gekennzeichnet, dass** die Versteifungsrippen (5) an unterschiedlichen Stellen der Spiegelglasträgerplatte (3) unterschiedlich hoch ausgebildet sind.

8. Kraftfahrzeug-Rückblickspiegel nach Anspruch 5, **dadurch gekennzeichnet, dass** die Versteifungsrippen (5) von einem Randbereich (8) der Spiegelglasträgerplatte (3) zum zentralen Gelenk (9) hin kegelförmig höher werdend ausgebildet sind.

9. Kraftfahrzeug-Rückblickspiegel nach Anspruch 1, 2, 3, 4, 5, 6, 7 oder 8, **dadurch gekennzeichnet, dass** die Größe der Waben (12) in Bereichen mit hoher Beanspruchung kleiner ist als in Bereichen mit geringerer Beanspruchung.
